# FASCICULE DE BREVET EUROPEEN

(11) **EP 1 092 108 B1**
(45) Date de publication et mention de la délivrance du brevet: **31.08.2005**
(21) Numéro de dépôt: 99956113.7
(22) Date de dépôt: 22.11.1999
(51) Int. Cl.: F16L 1/19, F16L 1/20, B63B 35/03, B63B 35/04

(54) **NAVIRE DE POSE DE CONDUITES RIGIDES A GRANDES PROFONDEURS**
SCHIFF ZUM VERLEGEN VON STARREN ROHRLEITUNGEN IN GROSSER TIEFE
DEEP WATER PIPELAYING SHIP

(30) Priorité: 30.04.1999 FR 9905508
(43) Date de publication de la demande: 18.04.2001
(73) Titulaire: Technip France, 92400 Courbevoie (FR)
(72) Inventeur: DE VARAX, Hervé, F-75004 Paris (FR); CRUICKSHANK, John, Duncan COFLEXIP STENA OFFSHORE, 2-3115 HH Schiedam P.O.Box150-3100AD Sch (NL)
(74) Mandataire: Bertrand, Didier
(86) Numéro de dépôt international: PCT/FR1999/002871
(87) Numéro de publication internationale: WO 2000/066922

(56) Documents cités:
- EP-A- 0 717 222
- FR-A- 2 199 053
- GB-A- 2 199 632
- GB-A- 2 296 956

## Description

La présente invention concerne un navire de pose de conduites tubulaires rigides et de conduites flexibles sous-marines destinées notamment à l'exploitation pétrolière en mer.

L'homme du métier distingue les conduites flexibles et les conduites rigides. On renvoie aux spécifications API 17B et 17J de l'American Petroleum Institute pour la définition des conduites flexibles et à la spécification API 17 A pour la définition des conduites rigides ; on rappelle simplement que les conduites flexibles ont un rayon minimal de flexion sans endommagement (souvent appelé MBR, "minimum bending radius") relativement petit (par exemple quelques mètres) par opposition aux conduites rigides, dont le rayon minimal de flexion sans déformation plastique est relativement grand (par exemple plusieurs dizaines de mètres). De plus, pour les besoins de l'exposé ci-après, on englobera sous la désignation générale de flexibles non seulement les conduites tubulaires flexibles à proprement parler, mais également les colonnes montantes (en anglais "risers") flexibles, les ombilicaux et les câbles flexibles qu'un navire de pose peut être amené à poser.

Des systèmes de pose pour les conduites rigides sont décrits dans l'API17A et pour les conduites flexibles dans l'API17B.

Pour les conduites rigides, on distingue deux types de pose, selon que les tronçons de conduites sont soudés en mer ("stove piping") ou soudés à terre ("reeled pipe").

Le premier type de pose comporte lui-même trois grandes subdivisions, la pose en S, celle en J et celle en G.

Selon la technique de pose en S, on assemble horizontalement sur le pont du navire les tronçons de conduite et on leur fait suivre un trajet en S à très grand rayon de courbure de manière à empêcher toute déformation plastique. La conduite quitte le navire sous un angle très oblique, à l'aide d'une gouttière (en anglais "stinger") inclinée. Cette technique ne convient qu'aux faibles et moyennes profondeurs de pose, car sinon, le poids de la chaînette de conduite déjà posée risquerait de couder et déformer plastiquement la conduite au niveau où elle sort de la gouttière. C'est pourquoi d'autres techniques ont dû être développées pour les plus grandes profondeurs d'eau.

Selon la technique de pose en J, les tronçons de conduite sont assemblés sur une tour verticale ou peu inclinée du navire de pose, les tronçons étant ainsi soudés les uns aux autres dans la direction de pose de la conduite, ce qui évite toute déformation plastique à ce stade, la conduite assemblée étant ensuite immergée en grande profondeur, toujours sans déformation plastique. Des exemples sont illustrés dans le document US 5 464 307 A ou dans la demande française 98 00 148 au nom de la Demanderesse.

Selon la technique de pose en G, illustrée par exemple par le document GB 2 287 518 A, des tronçons de conduites sont assemblées horizontalement sur le pont du navire comme dans la pose en S ; la conduite formée est envoyée vers l'avant du navire puis renvoyée vers l'arrière par une large roue entraînant une déformation plastique de la conduite, après quoi celle-ci passe dans des redresseurs et une succession de tensionneurs multichenilles, puis est larguée dans l'eau sous une certaine inclinaison qui peut être choisie en fonction de la profondeur d'eau pour éviter de déformer plastiquement la conduite au niveau de la chaînette immergée. Selon une variante montrée dans le document GB 2 296 956 A, la conduite préalablement assemblée par tronçons sur le pont est envoyée sur une goulotte arquée placée au sommet d'une rampe inclinable pourvue de tensionneurs ou de mâchoires de serrage ; les deux inflexions que subit la conduite entraînent des déformations plastiques de la conduite et rendent nécessaire d'utiliser des redresseurs. La vitesse de pose selon la technique en G est relativement faible.

Le second type de pose de conduites rigides, par tronçons soudés à terre, comprend la technique dite de rigide déroulé (en anglais "reeled pipe system"), illustrée par exemple par le document GB 2 025 566 A, où la conduite, qui a été soudée en grande longueur (supérieure à 1 km par exemple) à quai et enroulée avec déformation plastique autour d'une bobine verticale (qui peut atteindre de 15 à 20 m de diamètre) située sur le navire de pose, est déroulée de la bobine à nouveau avec déformation plastique et passe dans un redresseur-trancaneur avant d'être reprise par les convoyeurs à chenilles d'une rampe de pose inclinable prévue dans une zone d'immersion de conduite à l'arrière du navire et dont l'inclinaison est choisie en fonction de la profondeur de pose. Cette technique connaît cependant des limitations en termes de profondeur atteinte ; or aujourd'hui, les fonds marins exploités sont souvent à plus de 2000 m, ce qui exige d'embarquer une longueur considérable de rigide, ce que les navires existants ne peuvent faire.

Pour les conduites flexibles, on distingue aussi deux types de pose : la pose horizontale (dite HLS, pour "horizontal laying system"), d'application rapidement limitée à des faibles profondeurs de pose ; et la pose verticale (dite VLS, pour "vertical laying system"). Le document FR 2 660 402 A au nom de la demanderesse fait connaître tel type de pose VLS à partir du puits central ("moon pool") d'un navire de pose. La conduite est déroulée d'un panier de stockage et envoyée sur une goulotte de guidage en arc de cercle (familièrement baptisée "camembert") disposée en haut d'un derrick vertical de moyenne hauteur surmontant le puits et supportant deux tensionneurs multichenilles qui serrent et déplacent la conduite de manière continue. Ce système est bien adapté aux conduites flexibles (encore que les profondeurs atteintes sont actuellement d'environ 1700m), c'est-à-dire aux conduites qui peuvent prendre une courbure assez prononcée aussi bien dans le panier de stockage que sur la goulotte de renvoi et sur les portions intermédiaires du trajet en forme de chaînette. En revanche, ce système n'est pas adapté aux conduites rigides qui ne supportent pas de telles courbures ou pour lesquelles de telles courbures entraînent des déformations permanentes.

Comme on le voit donc, les bateaux de pose actuels ne sont pas adaptés à la pose de rigide et de flexible. On peut utiliser un bateau de pose de rigide déroulé pour poser du flexible mais ce moyen de pose n'est pas optimisé pour la pose du flexible (le rayon de courbure imposé au flexible durant la pose est beaucoup plus grand que le rayon minimum de courbure du flexible). On peut aussi utiliser le système décrit dans la demande de brevet français 98 00 148 mais la tour de pose en J doit être modifiée pour poser du flexible. Il existe certes des bateaux de pose (par exemple le SEAWAY FALCON et la MAXITA) pouvant poser à la fois du rigide et du flexible mais les moyens de pose sur ce type de bateau sont indépendants (il est prévu une tour de pose de rigide et une tour de pose de flexible).

Le but de l'invention est de proposer un navire de pose de conduite rigide déroulée permettant la pose à de très grandes profondeurs (notamment à 2500 m et plus) sans se heurter aux limitations rencontrées jusque là. Un autre but est de proposer un navire susceptible de combiner la pose de rigide déroulé et celle de flexible (VLS) en partageant de mêmes moyens de pose, et même celle de la pose de rigide en J.

Le but de l'invention est atteint grâce à un navire de pose de conduites tubulaires rigides, du type comportant des moyens de stockage en bobine verticale de conduite tubulaire rigide enroulée sous déformation plastique, une tour inclinable de pose disposée sensiblement au-dessus d'une zone d'immersion de conduite, une goulotte arquée de détournement de conduite en haut de la tour, et des moyens redresseurs de conduite et des tensionneurs disposés sur la tour, caractérisé en ce que les moyens de stockage sont sous forme de deux roues verticales voisines de très grandes dimensions, sensiblement orientées vers la tour, les plans médians des roues se coupant dans le plan vertical médian longitudinal du navire.

L'invention résout le problème de l'augmentation des capacités de stockage du navire en rigide enroulé d'une manière originale ; plutôt que d'augmenter les dimensions d'une roue unique de stockage dans des proportions qui la rendent difficilement contrôlable (par exemple une roue de 5000 tonnes pose des problèmes d'inertie en rotation, et exige des moyens de trancanage importants), l'invention propose de disposer deux roues de stockage voisines dans une orientation particulière, ce qui permet non seulement de maîtriser les problèmes d'inertie en rotation, mais également de se passer de trancanage pour le déroulement du rigide enroulé, surtout si, comme on le préfere, la goulotte de détournement peut elle-même être orientée vers l'une ou l'autre des roues ; à cet effet, le haut de la tour est monté de façon à permettre un pivotement suffisant de part et d'autre du plan médian longitudinal du navire, par exemple d'environ 15°, et cela quand la tour est verticale ou inclinée jusqu'à un angle qui peut être de 60° sur l'horizontale. Le haut de la tour pivotant contient les moyens redresseurs (de préférence en trois points) de sorte que le redressage du rigide déroulé se fait toujours dans une bonne orientation, sans induire une fausse torsion supplémentaire due à la position angulaire des roues verticales de stockage (c'est-à-dire une déformation plastique dans un plan différent du plan normal de courbure de la conduite enroulée).

Les plans médians des roues se coupent idéalement au niveau de l'entrée de la conduite rigide dans les moyens redresseurs de la tour. Comme celle-ci est d'inclinaison variable (entre 60° et 90°), on peut prévoir que la position angulaire des roues est ajustable en fonction de l'angle de pose grâce à des moyens de support et d'orientation adéquats des moyeux des roues. Dans une version simplifiée, on donne aux roues une orientation fixe correspondant à la position idéale pour un angle de pose moyen (75°), ce qui, dans un exemple de configuration, revient à faire couper les plans médians des roues en avant de la zone d'immersion de conduite, sensiblement au niveau du sommet de la goulotte de détournement (tour en position verticale). En pratique, les roues font alors un angle d'environ 5° par rapport au plan médian du navire.

En plus des avantages déjà mentionnés, le fait d'avoir deux roues de stockage permet de diviser par deux le temps de chargement à quai des roues et de stocker des conduites différentes sur l'une et l'autre roues, par exemple des conduites de diamètre différent.

Selon l'invention, la zone d'immersion de conduite est un puits central situé sensiblement vers le milieu du navire. Au niveau du puits central est prévue une table indépendante comportant une bride de serrage (clamp). Cette bride de serrage permet de retenir la chaînette pendant la pose d'accessoires sur les conduites ou le raccordement de deux tronçons de conduite. Ce clamp peut aussi être utilisé comme bride de serrage statique pour la pose en J. A cet effet, on fixe sur la tour une rampe de pose spécifique pour la pose en J ; le pont arrière est utilisé pour préparer des tronçons de conduite rigides ; la pose en J est réalisée grâce à un chariot mobile monté sur la rampe spécifique et manoeuvré par le treuil d'abandon et de récupération, et grâce à la bride de serrage statique.

Naturellement, le navire comporte aussi un puits de passage de robot de pose sous-marin.

Afin de permettre la polyvalence recherchée du navire, des paniers de stockage de conduite flexible sont prévus sur le navire, et la tour comporte également à son extrémité supérieure une goulotte pour flexible. On peut donc utiliser la tour pour la pose de flexible selon la technique VLS. De plus il est prévu suffisamment de place au niveau de la table de pose, à la base de la tour, pour poser divers accessoires sur la conduite (vertèbres, bouées, etc.). L'arrière du navire est également suffisamment vaste pour y disposer de nombreux agrès et matériels nécessaires à la préparation des conduites.

L'invention sera bien comprise, et d'autres caractéristiques et avantages de l'invention ressortiront à la lecture de la description suivante, faite en référence aux dessins annexés sur lesquels :
La figure 1 est une vue de côté avec arrachement partiel d'un navire de pose conforme à l'invention,
La figure 2 est une vue de dessus très simplifiée du navire de la figure 1, prise essentiellement au niveau du pont supérieur.

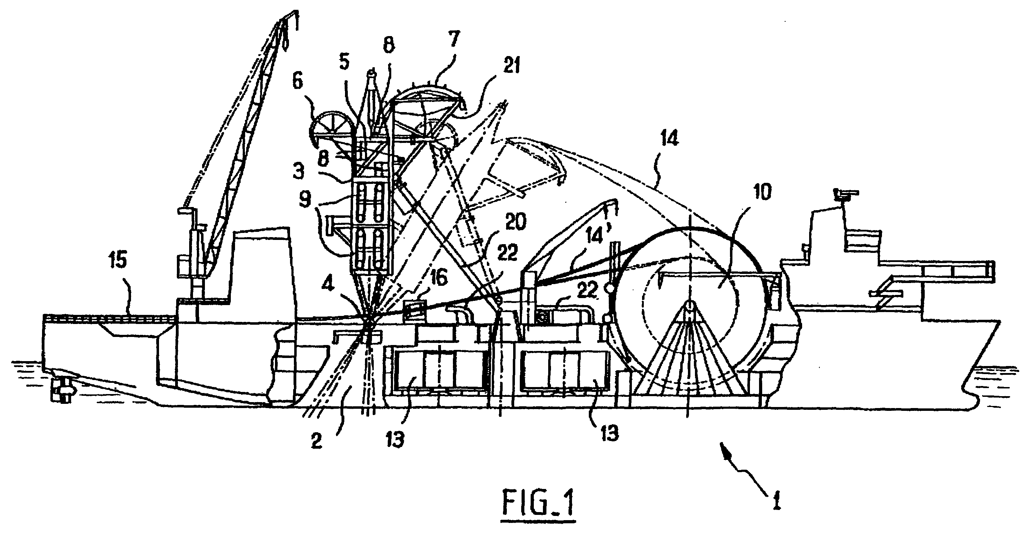

Le navire de pose 1, d'environ 230 m de long, comporte au tiers arrière un puits central de pose 2 au-dessus duquel s'élève une tour de pose 3 articulée à sa base en 4 (au voisinage du pont supérieur), de manière à pouvoir prendre des positions inclinées vers l'avant du navire, telle que la position représentée en pointillés sur la figure 1, grâce à un système de pignons-crémaillère 20.

La tour 3, qui s'élève à environ 50 m, comporte un module supérieur 5 d'environ 15 m de haut qui peut tourner par rapport à la partie inférieure autour de l'axe de la tour 3. Sur ce module 5 sont montées d'une part une petite goulotte de guidage 6 pour flexible et d'autre part une grande goulotte arquée 7 de détournement pour conduite rigide. La grande goulotte 7, d'environ 11 m de long, est soutenue par une potence 21 s'appuyant sur le module supérieur 5 et est agencée pour amener la conduite rigide déroulée dans un ensemble redresseur trois-points 8 disposé dans le module supérieur pivotant 5 de la tour, lesquels sont suivis en aval par un groupe de deux tensionneurs quadri-chenilles 9. La conduite est, dès l'entrée du redresseur, orientée dans la direction de pose.

En avant du puits central 2, à environ 80 m, sont disposés deux grandes roues 10 verticales, d'une capacité de 2500 tonnes, formées d'un moyeu d'environ 20 m et de flasques d'environ 31 m de diamètre, pour une largeur d'un peu plus de 5 m. Les roues sont montées en rotation de manière classique sur des roulements à rouleaux sphériques, et entraînées par des systèmes à pignon et crémaillère. Selon l'invention, les roues sont disposées symétriquement par rapport à l'axe longitudinal XX du navire, et orientées vers la tour 3, idéalement au niveau de l'entrée de la conduite rigide dans le redresseur trois-points 8 de la tour. Dans la configuration du dessin, les roues sont d'orientation fixe et les traces 11 de leur plan médian respectif se coupent sur l'axe longitudinal XX du navire, en avant du puits central 2, en un point 12 qui se trouve être voisin du pied de la projection du sommet de la grande goulotte 7 de la tour 3 lorsqu'elle est verticale.

Deux paniers 13 à axes verticaux, de stockage de flexible ou d'ombilical, d'une capacité de 1500 tonnes (diamètre externe d'environ 17 m), sont aussi prévus sur le navire 1, entre le puits central 2 et les roues 10. Des dispositifs de renvois de flexible 22 sont prévus au-dessus des paniers pour permettre l'enroulement du flexible dans les paniers à partir du pont, et son déroulement hors des paniers 13 vers le pont et la goulotte de guidage 6.

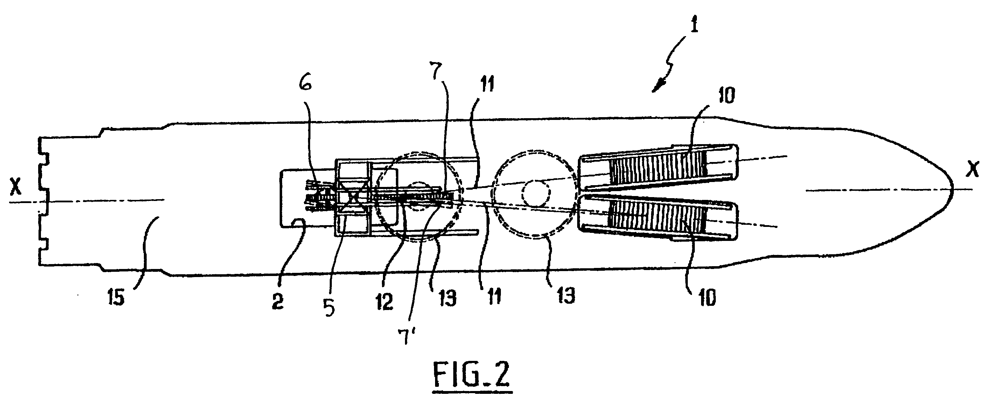

La conduite rigide 14 stockée sur l'une ou l'autre des roues 10 peut être déroulée de la roue comme montré en traits mixtes sur la figure 1, la conduite passant sur la grande goulotte 7, puis dans les redresseurs 8, et dans les tensionneurs 9, après quoi elle traverse le puits central pour rejoindre la chaînette de conduite posée. La possibilité de rotation du haut 5 de la tour permet d'orienter la grande goulotte 7 et le redresseur trois-points 8 vers celle des deux roues qui est débitée, et cela permet d'éviter d'imposer une torsion nuisible à la conduite déroulée. La figure 2 montre schématiquement la tour (représentée verticale) avec son module supérieur 5 et la goulotte 7 en position centrale, et, en traits mixtes référencés 7', la même goulotte après que le module supérieur a pivoté vers l'une des roues 10 (celle du bas sur le dessin).

Les traits pleins 14' montrent la conduite rigide en train d'être bobinée sur l'une ou l'autre des roues 10 à partie de l'arrière 15 du navire; lorsque celui-ci est à quai ou bien même par assemblage sur le pont même en raison de la grande place disponible. La conduite 14' passe sur un tensionneur trancaneur 16 disposé en avant du puits central 2 et permettant de réaliser un enroulement régulier de la conduite sur la roue. Le tensionneur 16 est monté pivotant en hauteur pour pouvoir s'adapter à l'angle variable que fait la conduite 14' au fur et à mesure de son bobinage sur la roue 10.

## Revendications

1. Navire de pose de conduites tubulaires rigides (14), du type comportant des moyens de stockage en bobine verticale (10) de conduite tubulaire enroulée sous déformation plastique, une tour (3) inclinable de pose disposée sensiblement au-dessus d'une zone d'immersion (2) de conduite, une goulotte arquée (7) de détournement de conduite en haut de la tour (3), et des moyens redresseurs (8) de conduite et des tensionneurs (9) disposés sur la tour (3), **caractérisé en ce que** les moyens de stockage sont sous forme de deux roues voisines (10) sensiblement orientées vers la tour (3), les plans médians des roues (10) se coupant dans le plan vertical médian longitudinal du navire.

2. Navire selon la revendication 1, **caractérisé en ce que** la goulotte de détournement (7) peut être orientée vers l'une ou l'autre des roues (10).

3. Navire selon la revendication 2, **caractérisé en ce que** la goulotte de détournement (7) et les moyens redresseurs (8) sont montés sur un module supérieur (5) de la tour capable de pivoter autour de l'axe de la tour (3).

4. Navire selon l'une des revendications 1 à 3, **caractérisé en ce que** les plans médians des roues (10) se coupent au niveau de l'entrée de la conduite rigide dans les moyens redresseurs (8) de la tour.

5. Navire selon l'une quelconque des revendications 1 à 3, **caractérisé en ce que** les plans médians des roues (10) se coupent en avant de la zone d'immersion (2), de préférence au niveau du sommet de la goulotte (7) quand la tour est en position verticale.

6. Navire selon l'une quelconque des revendications 1 à 5, **caractérisé en ce que** les roues (10) font un angle d'environ 5° sur l'axe longitudinal du navire.

7. Navire selon l'une quelconque des revendications 1 à 3, **caractérisé en ce qu'**il est prévu des moyens de support et d'orientation des roues (10) pour permettre d'ajuster la position angulaire des roues (10).

8. Navire selon l'une quelconque des revendications 1 à 7, **caractérisé en ce que** la zone d'immersion est un puits central (2).

9. Navire selon l'une quelconque des revendications 1 à 8, **caractérisé en ce que** des paniers (13) de stockage de conduite flexible sont également prévus et **en ce que** la tour (3) comporte une goulotte de renvoi (6) pour flexible.

## Patentansprüche

1. Schiff zur Verlegung von starren Rohrleitungen (14) in der Ausführung, die Folgendes aufweist: Lagerungsvorrichtungen als vertikale Wickelkörper (10) bzw. Coil der unter plastischer Verformung aufgerollten Rohrleitungen; einen neigbaren Verlegungsturm (3), welcher im Wesentlichen über einem Eintauchabschnitt (2) der Leitung angeordnet ist; eine bogenförmige Umlenkrinne (7) für die Leitung an der Oberseite des Turms (3); und am Turm (3) angeordnete Leitungsrichtvorrichtungen (8) und Spannvorrichtungen (9), **dadurch gekennzeichnet, dass** die Lagerungsvorrichtungen in Form von zwei benachbarten Rädern (10) ausgebildet sind, die zum Turm (3) hin ausgerichtet sind, wobei die Mittelebenen der Räder (10) sich in der vertikalen Längsmittelebene des Schiffs schneiden.

2. Schiff nach Anspruch 1, **dadurch gekennzeichnet, dass** die Umlenkrinne (7) zu dem einen oder dem anderen der Räder (10) hin ausrichtbar ist.

3. Schiff nach Anspruch 2, **dadurch gekennzeichnet, dass** die Umlenkrinne (7) und die Richtvorrichtungen (8) auf einem oberen Modul (5) des Turms um die Achse des Turms (3) schwenkbar angebracht sind.

4. Schiff nach einem der Ansprüche 1 bis 3, **dadurch gekennzeichnet, dass** sich die Mittelebenen der Räder (10) auf der Höhe des Eintritts der starren Leitung in die Richtvorrichtungen (8) des Turms schneiden.

5. Schiff nach einem der Ansprüche 1 bis 3, **dadurch gekennzeichnet, dass** sich die Mittelebenen der Räder (10) vor dem Eintauchabschnitt (2) vorzugsweise auf der Höhe des Scheitels der Rinne (7) schneiden, wenn der Turm in vertikaler Stellung steht.

6. Schiff nach einem der Ansprüche 1 bis 5, **dadurch gekennzeichnet, dass** die Räder (10) einen Winkel von ungefähr 5° auf der Längsachse des Schiffs bilden.

7. Schiff nach einem der Ansprüche 1 bis 3, **dadurch gekennzeichnet, dass** Trag- und Ausrichtvorrichtungen der Räder (10) zur Einstellung der Winkelstellung der Räder vorgesehen sind.

8. Schiff nach einem der Ansprüche 1 bis 7, **dadurch gekennzeichnet, dass** der Eintauchabschnitt ein zentraler Schacht (2) ist.

9. Schiff nach einem der Ansprüche 1 bis 8, **dadurch gekennzeichnet, dass** Lagerungskörbe (13) für flexible Leitungen ebenfalls vorgesehen sind, und dass der Turm (3) eine Umlenkrinne (6) für flexible aufweist.

## Claims

1. Vessel for laying rigid tubular pipes (14), of the type comprising means (10) of storing tubular pipe wound with plastic deformation on vertical reels, an inclinable laying davit (3) arranged approximately over a zone (2) at which the pipe enters the water, an arched chute (7) for deflecting the pipe at the top of the davit (3), and pipe-straightening means (8) and tensioners (9) arranged on the davit (3), **characterized in that** the storage means are in the form of two adjacent wheels (10) facing approximately towards the davit (3), the mid-planes of the wheels (10) intersecting in the vertical longitudinal mid-plane of the vessel.

2. Vessel according to Claim 1, **characterized in that** the deflecting chute (7) can be directed towards one or other of the wheels (10).

3. Vessel according to Claim 2, **characterized in that** the deflecting chute (7) and the straightening means (8) are mounted on an upper module (5) of the davit capable of pivoting about the axis of the davit (3).

4. Vessel according to one of Claims 1 to 3, **characterized in that** the mid-planes of the wheels (10) intersect near the point where the rigid pipe enters the straightening means (8) of the davit.

5. Vessel according to any one of Claims 1 to 3, **characterized in that** the mid-planes of the wheels (10) intersect forward of the water-entering zone (2), preferably in the region of the top of the chute (7) when the davit is in a vertical position.

6. Vessel according to any one of Claims 1 to 5, **characterized in that** the wheels (10) form an angle of about 5° to the longitudinal axis of the vessel.

7. Vessel according to any one of Claims 1 to 3, **characterized in that** means are provided for supporting and orientating the wheels (10) so as to allow the angular position of the wheels (10) to be adjusted.

8. Vessel according to any one of Claims 1 to 7, **characterized in that** the water-entering zone is a moon pool (2).

9. Vessel according to any one of Claims 1 to 8, **characterized in that** baskets (13) for storing flexible pipe are also provided, and **in that** the davit (3) comprises a flexible-pipe return chute (6).
